Europäisches Patentamt

European Patent Office

Office européen des brevets

(19)

(11) Publication number: **0 140 573**
**A2**

(12) # EUROPEAN PATENT APPLICATION

(21) Application number: **84306481.7**

(51) Int. Cl.⁴: **C 01 B 17/04**

(22) Date of filing: **21.09.84**

---

(30) Priority: **29.09.83 US 537464**

(43) Date of publication of application: **08.05.85**
**Bulletin 85/19**

(84) Designated Contracting States: **AT BE CH DE FR GB IT LI LU NL SE**

(71) Applicant: **Standard Oil Company, 200 East Randolph Drive, Chicago Illinois 60601 (US)**

(72) Inventor: **Palm, John William, 3713 East 48th Place, Tulsa Oklahoma 74135 (US)**

(74) Representative: **Ritter, Stephen David et al, Mathys & Squire 10 Fleet Street, London EC4Y 1AY (GB)**

---

(54) **Process and apparatus for recovery of sulfur from ammonia containing acid gas streams.**

(57) Ammonia accumulation problems during tail gas clean-up processes involving hydrogenation and water removal steps are prevented by removal of ammonia from the process stream and conversion to nitrogen and water.

EP 0 140 573 A2

PROCESS AND APPARATUS FOR RECOVERY OF SULFUR
FROM AMMONIA CONTAINING ACID GAS STREAMS

FIELD OF THE INVENTION

The present invention relates to process and apparatus for the recovery of elemental sulfur from feed streams containing ammonia and/or other nitrogen compounds. In a particular aspect, the invention relates to process and apparatus for reducing the amount of ammonia present in a tail gas cleanup unit and thus prevent accumulation of ammonia and ammonia-derived compounds in tail gas cleanup unit process stream(s).

BACKGROUND OF THE INVENTION

Many crude oils processed by refineries contain varying amounts of nitrogen and sulfur compounds. During the refining process, it frequently becomes necessary to remove such compounds because they impart undesired properties such as disagreeable odor, corrosivity, poor color, and the like, to salable products. In addition, the compounds may have deleterious effects in various catalytic refining processes applied to oils.

Various processes have been devised for removing the nitrogen and sulfur compounds from oils, one common process being treatment with hydrogen wherein the nitrogen and sulfur compounds are converted to ammonia ($NH_3$) and hydrogen sulfide ($H_2S$). Such conversion is usually promoted by use of elevated temperatures and pressures in the presence of hydrogenation catalysts. Reactions of the nitrogen and sulfur compounds with hydrogen to form $NH_3$ and $H_2S$ can also occur in other processes such as thermal and catalytic cracking, reforming, and hydrocracking, which are not specifically designed for such purpose. There are thus produced various effluent gas streams containing $NH_3$ and $H_2S$.

The removal of some $NH_3$ and $H_2S$ from such effluent streams may be accomplished by scrubbing with water, preferably at elevated pressure and low temperature. To obtain the desired extent of removal, however, it is often necessary to use a rather large amount of water so that a dilute aqueous solution of ammonia and $H_2S$ is formed. The refiner thus may be compelled to remove the $HN_3$ and $H_2S$ from such waters in, for example, a sour water stripper resulting in a need to then dispose of the resulting $NH_3$ and $H_2S$ vapor.

In many cases, it is desirable to use the hydrogen sulfide present in such mixtures as feed to a sulfur recovery operation; however, the presence of ammonia can give rise to complications. While processes exist which are capable of effecting separation of ammonia from hydrogen sulfide, such methods require a large capital investment and the operating costs are relatively high.

In conventional sulfur recovery operations in which the feed gas typically contains more than 50 mol percent hydrogen sulfide, all of the acid gas feed can be introduced into a combustion zone or furnace together with enough oxygen ordinarily in the form of air to convert about one-third of the hydrogen sulfide into sulfur dioxide. In the case of ammonia-contaminated hydrogen sulfide streams, even when sufficient additional air to burn ammonia is added, the hydrogen sulfide present can compete with the ammonia for the extra oxygen, resulting oftentimes in incomplete combustion of the ammonia. The presence of excessive concentrations of ammonia in the combustion products creates conditions downstream for the formation of ammonium salts, which may cause plugging in catalytic reactors, in the condenser tubes, the tail gas scrubber system, separator seal legs, etc. The failure of oxygen to effect complete combustion was borne out in tests performed where ammonia was purposely added to the feed. In a plant test, ammonia was present in the feed to the extent of about 23 volume percent or 230,000 ppm (dry basis). A conversion of about 99.9% was achieved in the furnace and the effluent had an ammonia concentration of about 200 ppm. In a second case (a laboratory run in which the feed contained 15 volume percent (dry basis) $NH_3$), the ammonia conversion exceeded 99.9% and the furnace effluent had an ammonia concentration of about 35 ppm.

We have found in the past that one method for handling a gas stream which contains ammonia in a conventional sulfur plant is to feed all of the ammonia-containing gas to the burner of the furnace together with a portion of ammonia-free acid gas, while the remaining ammonia-free acid gas is fed to a downstream point. This makes it possible to achieve ammonia conversions in a plant furnace as high as indicated above for the laboratory test. In plant units with this design which do not have tail gas clean-up units, the resulting ammonia at low concentration has passed through the condensers and catalyst beds without causing problems; however, if tail gas clean-up units are present, problems may result.

Sulfur plants are also employed to process $H_2S$-containing gases from various types of industrial operations other than petroleum refining. Hydrogen sulfide from certain of these operations may contain nitrogen-containing compounds which can form ammonia in the sulfur plant combustion zone or thermal reactor. An example is the hydrogen sulfide which is recovered from coal gas, also known as coke-oven gas, which is formed from destructive distillation of bituminous coal. This gas often contains hydrogen cyanide (HCN) which is partially combusted in the thermal reactor but may be partially hydrolyzed therein to form gaseous ammonia. We have found that the combustion system can be designed to result in a high efficiency for combustion of HCN, with the ammonia concentration in the effluent being low enough that it does not cause a problem in the condensers and catalytic reactors of conventional sulfur plant; however, it also may cause a problem in certain tail gas clean-up units.

In order to comply with the regulations of the Environmental Protection Agency, many sulfur plants now in operation or being designed employ some type of tail gas treating process to minimize the amount of sulfur compounds ultimately discharged into the atmosphere. One such treating process is known as the Cold Bed Adsorption (CBA) method which involves taking the sulfur plant tail gas and alternately feeding it to one of at least two catalytic reactors, at least one reactor being operated on adsorption, allowing $H_2S$ and $SO_2$ to further react at a relatively low temperature to produce free sulfur which is deposited on the catalyst, while at least one other reactor is undergoing a regeneration period, during which free sulfur is vaporized from the catalyst, and a cooling period to prepare the catalyst for the next adsorption period. In regeneration of, for example, the CBA catalyst beds, adsorbed sulfur is driven off the catalyst by the use, for example, of hot (650°F) effluent from the first reactor in the sulfur plant. Other hot gaseous streams can also be used for regeneration. The CBA process is described in detail in U.S. Patent No. 4,035,474, Kunkel et al., issued July 12, 1977.

When $NH_3$ is present in the feed stream to the sulfur plant, a certain amount of $NH_3$ remains in the sulfur plant tail gas, i.e., in the feed to the tail gas clean-up process, for example, the CBA unit. Ammonia present in the feed to the tail gas clean up process can react with $SO_2$ present to form ammonium sulfite which is adsorbed on the catalyst during the adsorption period. Later in the regeneration cycle when the catalyst is heated with regeneration gas, $NH_3$ is liberated. The liberated $NH_3$ can return in the regeneration gas to pass through the second Claus reactor and thence to the low temperature reactor in adsorption cycle, where it can be again adsorbed on the catalyst. Thus, the ammonia can be repetitively adsorbed on the first CBA catalyst bed, then desorbed from the first CBA bed but readsorbed on the second CBA bed, then desorbed from the second but readsorbed on the first in the next cycle, and so forth. Continued operation in this manner can eventually cause the deposition of ammonium salts on the catalyst to be excessive and result in deactivation and plugging of the catalyst. A method and apparatus for solving this problem is described in U.S. Patent 4,391,790, Palm et al., issued July 5, 1983.

Another type of tail gas clean-up process is such as that described in U.S. Patent 4,430,317, Reed et al., issued February 7, 1984. in which sulfur compounds are converted by hydrogenation to hydrogen sulfide followed by water removal, for example, in a quench tower, and subsequent removal of sulfur to achieve a higher level of sulfur recovery. Problems due to ammonia accumulation can occur in such systems as will be hereinafter described. Highly desirable are process and apparatus utilizing the Claus reaction for the recovery of sulfur for treating acid gas streams containing ammonia and/or other nitrogen compounds which are capable of such higher levels of sulfur recovery such as can be achieved with such systems or with other systems with which the instant invention is compatible. Such process and apparatus are hereinafter described.

## SUMMARY OF THE INVENTION

According to the invention, an acid gas stream comprising hydrogen sulfide and ammonia is introduced into a Claus thermal reaction zone (furnace) in which hydrogen sulfide and ammonia are combusted with oxygen to produce an effluent stream comprising elemental sulfur, hydrogen sulfide, sulfur dioxide, and uncombusted ammonia. Preferably, the ammonia content is reduced sufficiently in the thermal reaction zone not to cause problems in the Claus plant itself. The effluent stream, after removal of elemental sulfur, is then introduced into a Claus catalytic conversion zone, comprising at least one reactor operated at a temperature above the sulfur dew point, for example, in the range of about 450°F to about 700°F (370°C) where formation of elemental sulfur is facilitated. After removal of elemental sulfur, the resulting lean stream (Claus plant effluent stream) is introduced into a hydrogenation zone (reactor) and substantially all of the sulfur compounds therein are converted to hydrogen sulfide. The resulting stream containing most all sulfur in the form of hydrogen sulfide and containing ammonia which has not been removed from the stream is introduced into a water contacting zone and contacted with a first aqueous stream producing a second gaseous stream of reduced ammonia content and a second aqueous stream enriched in ammonia and ammonia-derived compounds. The second gaseous stream of reduced ammonia content and containing at least the preponderance of the sulfur compounds in the form of hydrogen sulfide is then subjected to further processing for the recovery of sulfur. The second aqueous stream is processed reducing the content of ammonia and ammonia-derived compounds and producing a third gaseous stream enriched in ammonia and ammonia-derived compounds. At least a portion of the third gaseous stream enriched in ammonia and ammonia-derived compounds is introduced into an ammonia reduction zone and the content of ammonia reduced. In one embodiment, the Claus thermal reaction zone (furnace) can serve as the ammonia reduction zone. In other embodiments, separate furnaces or catalytic ammonia decomposition zones can be utilized.

In further aspects of the invention, the second gaseous stream of reduced ammonia content can be introduced into an oxidation zone (reactor) and about a one-third portion of the hydrogen sulfide present can be oxidized to sulfur dioxide, followed by creation of a 2:1 molar ratio hydrogen sulfide:sulfur dioxide gaseous reaction mixture which is converted to sulfur under conditions that the sulfur is deposited on the catalyst in a low temperature Claus catalytic conversion zone (reactor).

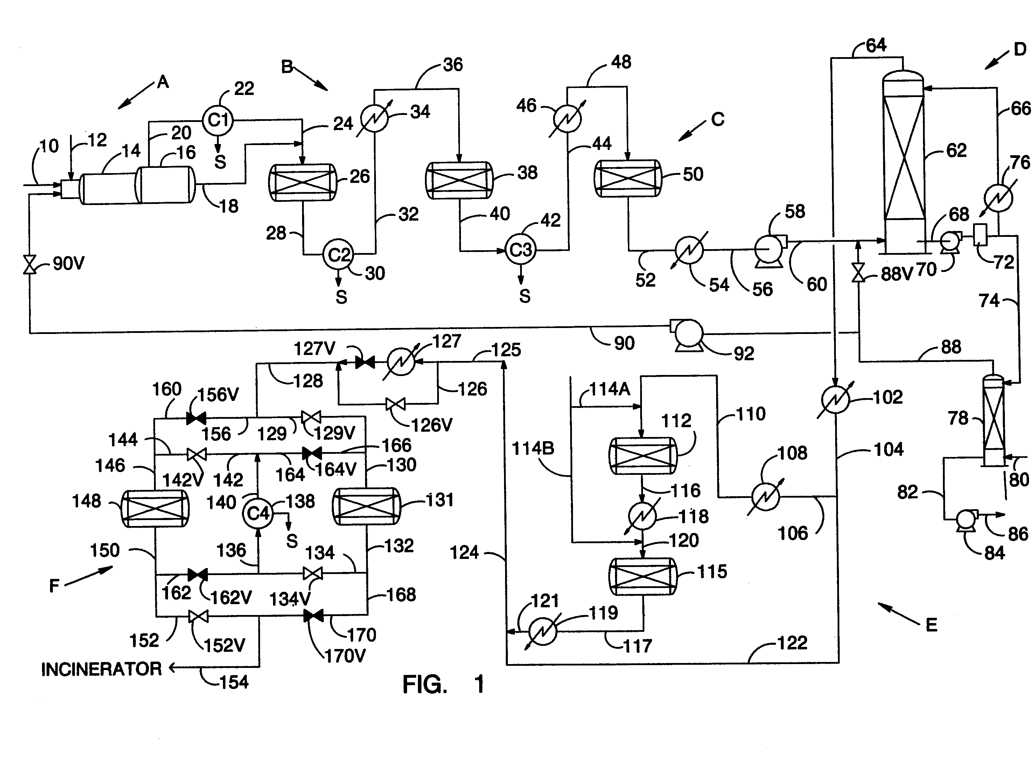

## BRIEF DESCRIPTION OF THE DRAWING

The invention will be further appreciated by reference to the following detailed description of the invention and the FIGURE which illustrates a preferred embodiment of the invention.

## DETAILED DESCRIPTION OF THE INVENTION

An acid gas stream containing hydrogen sulfide and ammonia is introduced by line 10 into a Claus thermal reaction Zone A and combusted in the presence of oxygen, supplied, for example, by line 12. Combustion can be generally at a temperature of about 2600°F (1427°C) for the effective decomposition of ammonia. Reactions involving hydrogen sulfide occurring in the thermal reaction Zone A can include the following:

$$(1) \quad H_2S + 3/2 \ O_2 = H_2O + SO_2 \qquad \text{Oxidation to } SO_2$$
$$(2) \quad 2H_2S + SO_2 = 2H_2O + 3S \qquad \text{Claus Reaction}$$
$$H_2S + 1/2 \ O_2 = H_2O + S \qquad \text{Overall}$$

Reactions involving ammonia and hydrogen cyanide can include the following:

$$(3) \quad 2NH_3 + 3/2 \ O_2 = N_2 + 3H_2O$$
$$(4) \quad 2HCN + 3/2 \ O_2 = N_2 + 2CO + H_2O$$

Other reactions can occur to a lesser extent, and can result in formation of $H_2$, NO, and very low concentrations of other nitrogen oxides. Air can be introduced by line 12 corresponding to about 0.5 moles oxygen per mole of hydrogen sulfide and about 0.75 moles oxygen per mole of ammonia. Combustion in the thermal reaction zone results in a hot reaction mixture containing products such as elemental sulfur, sulfur dioxide, water, hydrogen, nitrogen, and the like, as well as unreacted reactants, such as hydrogen sulfide and ammonia.

The Claus thermal reaction zone can be any suitable means for carrying out the thermal Claus reaction represented by Reactions (1) and (2) above. In the preferred embodiment, a muffle furnace 14 having an associated waste heat boiler 16 is utilized. After cooling in waste heat boiler 16, the hot reaction products effluent stream can be removed by line 20, and cooled in condenser 22 to condense and remove elemental sulfur. The lean effluent stream can then be provided by line 24 to Claus catalytic conversion Zone B. In the illustrated embodiment a portion of hot effluent is removed by line 18 from waste heat boiler 16 at an elevated temperature, for example, at about 1100°F after a single pass through the waste heat boiler and is utilized to reheat the process stream in line 24 being provided the first reaction of the Claus catalytic conversion Zone B. Other methods of reheat can, of course, also be used.

Claus catalytic conversion Zone B includes at least one Claus catalytic reactor followed by a sulfur condenser for the recovery of elemental sulfur. Two or even three or more Claus catalytic reactors can be utilized. The reactor(s) can contain catalyst effective to facilitate the Claus reaction (2) stated above, and also to facilitate carbonyl sulfide (COS) and carbon disulfide ($CS_2$) decomposition if such are present. An alumina catalyst, such as, for example, Kaiser S-201 alumina catalyst, available from Kaiser Chemicals, has proven particularly satisfactory by reason of economy and effectiveness. Other catalysts can, of course, also be used.

Referring to the Figure, Claus catalytic conversion Zone B comprises a first Claus catalytic reactor 26 into which an inlet stream is provided by line 24 at an inlet temperature preferably in the range of about 221 to 238°C (430-460°F). Higher temperatures, for example, about 260°C (500°F), can be utilized if carbonyl sulfide or carbon disulfide are present. The inlet stream can flow through, for example, a supported bed of alumina catalyst where reaction (2) above is facilitated and the effluent stream containing elemental sulfur, unreacted hydrogen sulfide, sulfur dioxide, and ammonia can be removed by line 28.

The effluent stream from first reactor 26 can be provided by line 28 to second sulfur condenser 30 (C2) in which the effluent stream can be cooled to below about 260°F and elemental sulfur can be removed and the resulting stream from the second condenser can then be provided by line 32 to reheat exchanger 34 for heating to an effective inlet temperature in line 36 for second Claus reactor 38.

Reheat exchanger 34 heats the effluent from second condenser 30 to an inlet temperature, for example, of about 205°C (400°F) in line 36 provided to the second Claus reactor 38. The process stream flows in contact with the catalyst in reactor 38 where reaction (2) is facilitated and an effluent stream containing elemental sulfur, hydrogen sulfide, sulfide dioxide, and ammonia can be removed by line 40 and provided to third sulfur condenser 42 (C3) where the stream is cooled to below about 260°F and elemental sulfur recovered. The stream from the third sulfur condenser can then, if desired, be provided to a third (or further) Claus reactor(s) and associated sulfur condenser(s), not shown, for further removal of sulfur from the effluent stream.

The effluent stream from Claus catalytic conversion Zone B (Claus plant effluent stream) can be removed, for example, by line 44 and provided to a hydrogenation Zone C where substantially all of the sulfur compounds present can be converted to hydrogen sulfide. Such Claus plant effluent streams can include, for example, hydrogen sulfide in the range of about 0.4 to about 2 mol%, sulfur dioxide in the range of about 0.2 to about 1 mol%, water in the range of about 30 to about 40 mol%, uncombusted ammonia in the range of about 0.003 to about 0.020 mol%, as well as organic sulfides such as carbonyl sulfide and carbon disulfide, and elemental sulfur. Claus plant effluent streams having compositions outside these ranges may also be treated in accordance with the invention.

The sulfur containing compounds of the Claus plant gaseous effluent stream can be converted to hydrogen sulfide in the hydrogenation Zone C. The hydrogenation Zone C can be either catalytic or noncatalytic, although a catalytic hydrogenation zone is preferred. Useful catalysts are those containing metals of Groups VB, VIB, VIII

-10-

and the Rare Earth series of the Periodic Table of the Elements, as published in Perry, <u>Chemical Engineers' Handbook</u>, Fifth Edition, 1973. The catalyst may be supported or unsupported although catalysts supported on a silica, alumina, or silica-alumina base are preferred. The preferred catalysts are those containing one or more of the metals, cobalt, molybdenum, iron, chromium, vanadium, thorium, nickel, tungsten and uranium. Particularly preferred are standard cobalt-molybdenum type hydrogenation catalysts, for example, United Catalyst Type C29-2 available from United Catalysts Incorporated, Louisville, Kentucky, 40232.

The reducing equivalents, hydrogen and carbon monoxide, necessary for converting sulfur-containing compounds to hydrogen sulfide in the hydrogenation zone can be provided from an external source (not shown in the FIGURE) or can be present within the Claus plant effluent stream. Preferably, the hydrogen can be present in the Claus plant effluent stream. However, if insufficient reducing equivalents are present, then, for example, a reducing gas generator can be used for the partial combustion of fuel gas to produce reducing equivalents in the form of hydrogen and carbon monoxide. Other methods of providing hydrogen will be readily apparent to those skilled in sulfur recovery.

The hydrogenation zone can be operated at a temperature in the range of about 450°F to about 650°F when a catalyst as described above is present. Preferably, the hydrogenation zone is operated at a temperature from about 580°F to about 650°F to provide adequate initiation and conversion of the sulfur containing compounds to hydrogen sulfide.

Thus, referring to the FIGURE, the Claus plant effluent stream 44 is provided to hydrogenation zone preheater 46 and the heated stream is provided by Line 48 to hydrogenation reactor 50 containing, for example, a supported bed of effective hydrogenation catalyst. Substantially all sulfur compounds can be converted in reactor 50

-11-

to hydrogen sulfide and the resulting stream containing hydrogen sulfide and remaining unconverted ammonia can be removed by Line 52.

Following conversion of the sulfur containing compounds to hydrogen sulfide, the process stream can be provided to cooling and water and ammonia removal Zone D in which the process stream is cooled and water and ammonia are removed therefrom. Thus, the resulting hydrogen sulfide containing stream can be pressurized to the system operating pressure necessary and suited to compensate, for example, for the pressure drop of subsequent steps, which as hereinafter described in a preferred embodiment, can include steps for the catalytic oxidation of hydrogen sulfide to sulfur dioxide as well as steps for the catalytic conversion of hydrogen sulfide and sulfur dioxide to sulfur under low temperature and low water vapor conditions. Generally, for the preferred embodiment according to the invention as hereinafter described, it will be sufficient to pressurize the system to a pressure greater than about 5 psig, preferably in the range of about 6 psig to about 12 psig. This can be accomplished by any suitable arrangement of pressurizing equipment, for example, compressors, blowers, and the like.

It is preferred that the hydrogen sulfide containing stream be cooled prior to pressurization to facilitate selection and to improve deliverability of the pressurizing equipment. Preferably, the hydrogen sulfide containing stream is cooled to a temperature below about 350°F, and most preferably in the range of from about the water dewpoint for the hydrogen sulfide containing stream to about 350°F before pressurizing. Generally, for Claus plant tail gas streams having about 30 mol% water, the hydrogen sulfide stream should not be cooled below about 180°F. After cooling the hydrogen sulfide containing stream from the hydrogenation Zone C to a temperature preferably in the range of about 180°F to about 350°F, the cooled stream can be pressurized to an effective system operating pressure. Alternatively, the pressurization can occur downstream of the cooling and water condensing zone. The hydrogen sulfide containing process stream can then be introduced into a cooling and water condensing zone D, which can comprise a contact condenser, for example, a quench tower effective for substantial temperature reduction of the stream therein, where it is contacted with, for example, cooled water, to cool and to condense and remove water and to remove ammonia from the hydrogen sulfide containing stream. In the contact condenser, the hydrogen sulfide containing stream can be contacted, for example, with water having a temperature in the range from about 4°C (40°F) to about 50°C (120°F) to condense and remove water from the hydrogen sulfide containing stream.

The water contacting serves to condense and remove water from the process stream and also to remove at least a substantial portion of the remaining unconverted ammonia therefrom. During contacting, ammonia together with small amounts of hydrogen sulfide dissolve in the water resulting in an aqueous stream containing ammonia and ammonia derived compounds. These latter can include, for example, ammonium hydroxide as well as ammonium sulfide and ammonium hydrosulfide and the like which can be formed by reaction with hydrogen sulfide present. A purified gaseous stream from which most all ammonia has been removed is also produced and can be provided, for example, to oxidation Zone E as described in more detail below.

The aqueous stream containing the ammonia and ammonia-derived compounds can be provided to a sour water stripper where hydrogen sulfide, ammonia, and ammonia derived compounds can be removed from the aqueous stream, thus producing a purified water effluent stream and an overhead gaseous stream containing hydrogen sulfide, ammonia and water vapor. This overhead gaseous stream can be recycled to the quench tower. However, if the entire gaseous overhead stream containing ammonia is returned to the contacting step, the effect can be to accumulate or concentrate the ammonia in the cooling and water removal zone which can result in objectionably high concentrations of ammonia and the like in these streams which can cause corrosion and resultant operating problems. Furthermore, this buildup of ammonia concentration in the circulating liquid can force the ammonia eventually to leave in the overhead gaseous stream from the quench tower. It can then flow to, for example, the CBA reactors, where the ammonia would be deposited on the catalyst in the form of ammonia-derived compounds such as ammonium sulfite and ammonium hydrosulfide. Upon regeneration the ammonia deposited on the catalyst in one reactor would be decomposed and transported to the other reactor, resulting in buildup with eventual catalyst deactivation and plugging.

To prevent such buildup of ammonia and ammonia-derived compounds, at least a portion of gaseous stream from the sour water stripper can be provided to an ammonia destruction zone, for example, the Claus furnace where a high proportion of the recycled ammonia can be destroyed, thus, preventing a harmful buildup anywhere in the system.

All or a portion of the gaseous stream containing ammonia and hydrogen sulfide can be provided to the ammonia destruction zone either on a continuous basis or at intervals. Thus, a portion can be provided to the destruction zone on a continuous basis such that the accumulation of ammonia is maintained at a predetermined level, for example, in the gaseous stream or in the sour water stripper feed stream. Alternatively, a portion or all of the stream can be provided to the ammonia destruction zone at intervals or on a periodic basis such that the level of ammonia does not exceed a preset limit. Autoanalyzers can, of course, be used in a suitable control system; however, experience in sulfur plants indicates that such will generally not be necessary.

It will be understood that use of the Claus reaction furnace as an ammonia destruction zone is preferred for convenience and simplicity. However, other means for ammonia destruction can, of course,, also be used, for example, separate fuel fired furnaces or direct heaters, catalytic ammonia decomposition zones, and the like.

Referring again to the FIGURE, effluent from the hydrogenation Zone C can be provided by line 52 to cooler 54. The cooled effluent from cooler 54 in line 56 can then be pressurized by compressor 58 and provided by line 60 to quench tower 62. In quench tower 62, the cooled effluent is contacted with an aqueous stream provided by line 66 and water and ammonia removal is achieved producing a cooled gaseous stream 64 of reduced water and ammonia content.

An aqueous stream containing ammonia and ammonia-derived compounds as well as small amount of hydrogen sulfide can be removed from quench tower 62 by line 68, pump 70, and filter 72. A first portion can be returned to the quench tower by line 66 after cooling in exchanger 76. A second portion can be removed by line 74 to sour water stripper 78.

In sour water stripper 78 (having steam provided by line 80 and pure water removed by line 82, pump 84, and line 86), ammonia and hydrogen sulfide can be removed, and ammonia-derived compounds can be decomposed and removed, in a gaseous stream by line 88. The gaseous stream in line 88 can comprise predominantly water vapor, hydrogen sulfide, and ammonia; some carbon dioxide may also be present. At least at intervals a portion or all of the gaseous stream in line 88 can be provided to an ammonia destruction zone, for example, Claus furnace 14, by line 90, pump 92, and valve 90V. Remaining portions can, if desired, be returned to the quench tower inlet, for example, by line 88 and valve 88V.

From the cooling and water and ammonia removal zone, the resulting pressurized hydrogen sulfide containing stream of reduced water and ammonia content having a temperature in the range of about 40°F to about 120°F, and preferably in the range of about 40°F to about 90°F, can be provided to an oxidation Zone E in which about a 1/3 portion of the hydrogen sulfide can be converted to sulfur dioxide in the presence of stoichiometric molecular oxygen. This can be achieved by dividing the pressurized hydrogen sulfide containing stream of reduced water content into about 1/3 and about 2/3 portions, and oxidizing the about 1/3 portion to sulfur dioxide in the presence of sufficient molecular oxygen to accomplish the oxidation to sulfur dioxide.

The oxidation of the about 1/3 portion can be performed catalytically in the presence of an oxidation catalyst effective for conversion of hydrogen sulfide to sulfur dioxide in the absence of any substantial excess of molecular oxygen over that required for the conversion. A slight excess of molecular oxygen is, however, preferred. Suitable oxidation catalysts can include the standard Claus activated alumina catalyst for which a feed temperature to the catalyst bed in the range of about 450°F to about 700°F, preferably in the range of about 500°F to about 550°F, can be utilized. To prevent changes in the catalyst structure, the temperature within the oxidation reactor can preferably be kept below about 900°F. As a result, for many plants, more than one oxidation reactor can be utilized with interstage cooling to prevent temperature exceeding about 900°F in any given reactor.

The effluent stream from the oxidation reactor containing substantially sulfur dioxide having a temperature in the range of about 750°F to about 1050°F, preferably less than about 850°F to provide an operating margin below 900°F to prevent damage to catalyst as mentioned above, can then be cooled and recombined with the about 2/3 portion of the pressurized hydrogen sulfide containing stream of reduced water content to produce a gaseous reaction mixture stream having a hydrogen sulfide:sulfur dioxide ratio of about 2:1 and having a temperature such that elemental sulfur can be deposited.

Thus, referring to the FIGURE, the effluent process stream from Zone D can be provided by line 64 to heater 102. The heated stream in line 104 from heater 102 can be divided into about 1/3 and about 2/3 portions and the 1/3 portion can be provided by line 106, to heater 108, and by line 110 to oxidation reactor 112 having air introduced by line 114a. The effluent from reactor 112 can be provided by line 116, interstage cooler 118, and line 120 to oxidation reactor 115. Air can be provided by line 114b. The effluent from oxidation reactor 115 having substantially all hydrogen sulfide converted to sulfur dioxide can be provided by line 117, cooler 119, and line 121 and combined with a remaining about two-thirds portion of hydrogen sulfide from line 104 provided via line 122. The resulting combined stream in line 124 comprises about a 2:1 molar ratio hydrogen sulfide:sulfur dioxide, preferably below the sulfur deposition temperatures, most preferably below about 127°C (260°F).

The gaseous reaction mixture stream in line 124 can then be introduced into a low temperature Claus catalytic conversion Zone F operated in the range of about 160°F to about 260°F, and preferably in the range of about 200°F to about 240°F to produce elemental sulfur. Low temperature Claus catalytic conversion Zone F preferably comprises at least two low temperature Claus catalytic reactors. Each of the low temperature reactors can be sequentially operated on an adsorption, regeneration, and cooling cycle. At least one of the reactors can be on adsorption cycle at all times. Each of the low temperature reactors can contain a bed of Claus catalyst such as described hereinbefore and can be operated at a temperature such that elemental sulfur formed deposits on the catalyst. Broadly the temperatures can be from 160°F or below to about 330°F, preferably from about 160°F to about 260°F for high recovery.

Referring to the FIGURE, both low temperature reactors are shown on adsorption. The gaseous reaction mixture stream at, for example, 107°C (225°F) in line 124 is passed by lines 125 and 126, valve 126V, lines 128 and 129, valve 129V and line 130 to reactor 131 where the Claus reaction is facilitated and elemental sulfur is deposited on the catalyst. The leaner effluent stream can be removed from reactor 131 by line 132 and can be passed by line 134, valve 134V, line 136, cooler/condenser 138, lines 140 and 142, valve 142V, and lines 144 and 146 to reactor 148 where the Claus reaction is facilitated and additional elemental sulfur is deposited on the catalyst. The sulfur lean stream can be removed by line 150 and passed to an incinerator by line 152, valve 152V, and line 154.

When catalyst in reactor 131 achieves a predetermined loading, the inlet stream can be heated to regeneration temperatures by closing valve 126V, opening valve 127V, and passing the gaseous reaction mixture stream through regeneration heater 127. The heated regeneration stream then flows through reactor 131 vaporizing elemental sulfur from the catalyst which is recovered in cooler/condenser 138. Adsorption is continued in reactor 148 during regeneration of reactor 131. Following regeneration, the reactor 131 can be cooled and returned to adsorption by opening valve 126V and closing valve 127V.

It will be appreciated that catalyst loading in second low temperature reactor 148 will proceed more slowly than in first low temperature reactor 131 because reactor 148 processes a leaner gas. However, reactors 131 and 148 can be reversed in position so that reactor 148 occupies the first position and reactor 131 the second position to permit regeneration of reactor 148 by closing valves 129V, 142V, 134V, and 152V and by opening valves 156V, 162V, 164V, and 170V. In this configuration, the gaseous reaction mixture stream in line 128 can flow in the following sequence: Line 156, valve 156V, line 160, line 146, reactor 148, line 150, line 162, valve 162V, line 136, cooler/condenser 138, line 140, line 164, valve 164V, line 166, line 130, reactor 131, lines 132, 168, and 170, valve 170V, and line 154 to the incinerator. Regeneration of reactor 148 can be carried out as described above for reactor 131 by closing valve 126V and opening valve 127V.

It will be appreciated that the above description provides a solution to the problem of harmful accumu-

0140573

-18-

lations of ammonia in Claus tail gas clean up units which is inexpensive and readily implemented. While the invention has been described in detail in terms of a preferred embodiment, it is not intended that the invention be limited thereby but by the scope of the claims appended hereto.

0140573

WHAT IS CLAIMED IS:

1. Process for the recovery of sulfur comprising:

introducing a Claus plant effluent stream into a hydrogenation zone, converting substantially all sulfur compounds to hydrogen sulfide, and producing a first gaseous stream containing hydrogen sulfide and ammonia;

contacting the first gaseous stream containing hydrogen sulfide and ammonia with a first aqueous stream in a contacting zone and producing a second aqueous stream containing ammonia and ammonia-derived compounds and further producing a second gaseous stream of reduced ammonia content;

recovering sulfur from the second gaseous stream;

reducing the content of ammonia and ammonia derived compounds in the second aqueous stream and producing a third aqueous stream of reduced content of ammonia and ammonia-derived compounds and a third gaseous stream containing ammonia and ammonia-derived compounds; and

introducing at least a portion of the third gaseous stream containing ammonia and ammonia-derived compounds into an ammonia reduction zone and reducing the content of ammonia therein.

2. Process as in Claim 1 wherein:

the ammonia reduction zone is a thermal reaction zone in which ammonia is decomposed in the presence of oxygen, producing water and nitrogen.

3. Process as in Claim 1 comprising:

recovering sulfur from an acid gas stream containing hydrogen sulfide and ammonia in a first Claus conversion zone and producing a first effluent stream of reduced ammonia content containing hydrogen sulfide and sulfur dioxide;

converting substantially all sulfur species of the first effluent stream to hydrogen sulfide to produce the first gaseous stream;

contacting the first gaseous stream containing ammonia and hydrogen sulfide with a first aqueous stream in a contacting zone and producing the second aqueous stream containing ammonia and ammonia-derived compounds and a second gaseous stream of reduced ammonia and ammonia-derived compounds content; and

recovering sulfur from the second gaseous stream.

4. Process as in Claim 3 further comprising recovering sulfur from the second gaseous stream by oxidizing a portion of the second gaseous stream to sulfur dioxide and creating an about 2:1 molar reaction mixture of hydrogen sulfide to sulfur dioxide;

converting the 2:1 molar reaction mixture to sulfur at temperatures such that sulfur is deposited on the catalyst;

reducing the ammonia content of the second aqueous stream containing ammonia and ammonia-derived compounds and producing the third aqueous stream of reduced content of ammonia and ammonia-derived compounds and the third gaseous stream; and

reducing the content of ammonia and ammonia-derived compounds in at least a portion of the third gaseous stream by oxidation in the presence of an oxygen containing gas, producing water and nitrogen.

5. Apparatus for the recovery of sulfur from a Claus plant effluent stream comprising:

hydrogenation means for receiving a Claus plant effluent stream containing hydrogen sulfide, sulfide dioxide, and ammonia and for converting substantially all sulfur compounds to hydrogen sulfide producing a hydrogenated gaseous stream;

contacting means in flow communication with the hydrogenation means for receiving the hydrogenated gaseous stream and for contacting the hydrogenated gaseous stream with water and for producing a second aqueous stream containing ammonia and ammonia

derived compounds and a second gaseous stream of reduced ammonia content;

conversion means in flow communication with said contacting zone for receiving the second gaseous stream of reduced ammonia content and for converting hydrogen sulfide therein to elemental sulfur;

stripping means in flow communication with the contacting means for receiving the second aqueous stream therefrom and for producing a third aqueous stream of reduced content of ammonia and ammonia-derived compounds and a third gaseous stream of enhanced content of ammonia and ammonia derived compounds; and

ammonia destruction means in flow communication with the stripping means for receiving the third gaseous stream therefrom and for reducing the content of ammonia and ammonia-derived compounds in the third gaseous stream.

FIG. 1